# EUROPEAN PATENT SPECIFICATION

(11) **EP 1 424 514 B1**
(45) Date of publication and mention of the grant of the patent: **08.11.2006**
(21) Application number: 03026888.2
(22) Date of filing: 24.11.2003
(51) Int. Cl.: F16H 55/28

(54) **Rack structure for backlash-free rack-and-pinion**
Zahnstangen für spielfreien Zahnstangenantrieb
Crémaillère pour mécanisme d'entraînement à pignon et crémaillère sans jeu

(30) Priority: 28.11.2002 JP 2002345124
(43) Date of publication of application: 02.06.2004
(73) Proprietor: ORION ELECTRIC CO., Ltd., Takefu-shi, Fukui 915-8555 (JP)
(72) Inventor: Minowa, Taizo, Takefu-shi Fukui 915-8555 (JP); Azai, Kouji, Takefu-shi Fukui 915-8555 (JP); Watanabe, Kazuhiro, Takefu-shi Fukui 915-8555 (JP)
(74) Representative: Vossius & Partner

(56) References cited:
- DE-A1- 3 929 424
- DE-A1- 4 417 690
- DE-A1- 19 758 251
- PATENT ABSTRACTS OF JAPAN vol. 2002, no. 05, 3 May 2002 (2002-05-03) -& JP 2002 025206 A (TOKYO PIGEON CO LTD), 25 January 2002 (2002-01-25)
- PATENT ABSTRACTS OF JAPAN vol. 008, no. 090 (M-292), 25 April 1984 (1984-04-25) -& JP 59 006464 A (NORIOKI NAKABASHI), 13 January 1984 (1984-01-13)
- PATENT ABSTRACTS OF JAPAN vol. 1999, no. 01, 29 January 1999 (1999-01-29) -& JP 10 289544 A (SONY CORP), 27 October 1998 (1998-10-27)
- PATENT ABSTRACTS OF JAPAN vol. 2000, no. 25, 12 April 2001 (2001-04-12) -& JP 2001 229631 A (SANYO ELECTRIC CO LTD), 24 August 2001 (2001-08-24)
- PATENT ABSTRACTS OF JAPAN vol. 2003, no. 02, 5 February 2003 (2003-02-05) -& JP 2002 288949 A (TOSHIBA CORP), 4 October 2002 (2002-10-04)
- PATENT ABSTRACTS OF JAPAN vol. 2000, no. 16, 8 May 2001 (2001-05-08) -& JP 2001 006302 A (KENWOOD CORP), 12 January 2001 (2001-01-12)

## Description

The present invention relates to a backlash-free rack-and-pinion appropriate for effecting the interconversion of rotary and linear motion in an electronic device, toy or clock, and more particularly to a rack structure for such a backlash-free rack-and-pinion.

To reciprocate a movable part in a precision machine and apparatus, a rack-and-pinion has been widely used. For example, a disc device uses a rack-and-pinion for moving its disc tray back and forth. Also, another rack-and-pinion is used for driving an optical pickup across a disc, which is rotated on the tumtable. It is required that the optical pickup be carried right to the disc, and driven across it at a controlled speed. As a matter of fact it is most important that the optical pickup be precisely controlled in position.

As is well known, the rack meshes with the pinion with minimum gap between the teeth of the rack and the teeth of the pinion. Then, a backlash may result from somewhat loose connections between the gear wheel and the toothed bar. The backlash is most evident on reversal of movement, and therefore, the precision in the position control is apt to lower in reciprocating the optical pickup, thereby making impossible to record or reproduce the sound and/or pictures to or from the disc. In an attempt to remove such backlash a variety of backlash removing structures have been proposed.

JP2002-25206 (A), titled "Pickup Feeding Mechanism of Disc Player" shows a rack-and-pinion structure using a composite rack comprising parallel-arranged a first and second toothed bars and two parallel resilient strips arranged obliquely in the longitudinal space between the parallel toothed bars, and connected thereto. The confronting teeth of the first and second toothed bars are offset in phase from each other. With this arrangement when the teeth of a pinion are pushed in between the teeth of the composite rack, the teeth of the composite rack are forcibly pushed open to each other by the turning deformation of the resilient strips. Thus, the pinion can mesh with the composite rack without leaving a minimum backlash between the rack teeth and the pinion teeth, by which the smooth rotation is assured.

However, the conventional rack-and-pinion structure requires that a significant longitudinal space be left between the parallel toothed bars due to the resilient strips, and therefore, the rack-and-pinion structure is relatively large in size. Also, the pinion to mesh with the composite rack is inevitably large in size. The metal mold for injection-molding such a composite object is so complicated in structure, and accordingly expensive. Still disadvantageously, the rack-and-pinion structure is apt to be broken at the resilient strip-to-toothed bar joints. Such products are often damaged or deformed while being transported. The resilient strips are not connected to opposite toothed bars exactly at prescribed angles and it inflicts a noticeable degree of backlash on the rack-and-pinion structures.

In view of the above one object of the present invention is to provide a backlash-free rack, which is simple in structure, and small in size, still assuring that no backlash is caused in reciprocating a movable part in an electronic device or any device which requires precision control in moving its movable part.

To attain this object a rack structure of a rack-and-pinion structure for a feeding mechanism in an electronic device, toy or clock, is improved according to the present invention in that the rack structure comprises first and second toothed bars both integrally connected to each other by an intermediate joint of a soft resin material to provide a linear toothed bar object, which is so folded about the intermediate joint that the first and second toothed bars are laid on each other with their teeth somewhat out of phase, thereby preventing a backlash which otherwise, would be caused between the teeth of the rack and those of the pinion.

With this arrangement the first and second toothed bars are resiliently displaced to each other in their longitudinal directions when they are folded about the intermediate joint. Specifically, the first and second toothed bars are somewhat displaced and laid on each other so that they may be responsive to the meshing with the pinion for pinching some teeth of the pinion between the counter teeth of the somewhat staggered first and second toothed bars, thus preventing the backlash, which otherwise would be caused.

One of the first and second toothed bars may have hooks rising upright from one side whereas the other toothed bar may have holes made therein, whereby the first and second toothed bars when folded on each other are fastened together with the hooks inserted and caught by the hole edges.

The intermediate joint may have two counter nails formed thereon, these counter nails being so positioned that they are engaged with each other when the intermediate joint is folded, making the teeth of the first and second toothed bars longitudinally out of phase relative to each other.

Other objects and advantages of the present invention will be understood from the following description of composite rack structures according to preferred embodiments of the present invention, which are shown in accompanying drawings.
Fig.1 is a perspective view of a rack structure according to one embodiment of the present invention;
Fig.2 is a perspective view of the rack structure, which is shown as being unfolded;
Figs.3a, 3b and 3c are front, side and top plan views of a rack structure according to another embodiment of the present invention;
Figs.4a, 4b, and 4c are front, side, and top plan views of the rack structure of Fig.3 which is shown as being unfolded;
Fig. 4d is sectional view of line 4d - 4d in Fig. 4a; and
Fig.5 is an enlarged view of the part of Fig.3 encircled and marked "A".

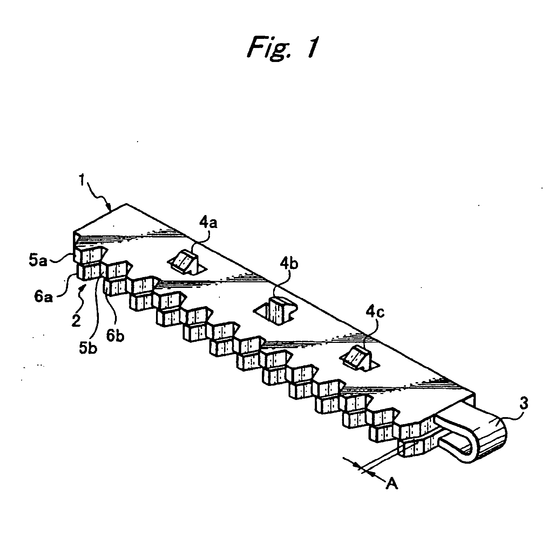

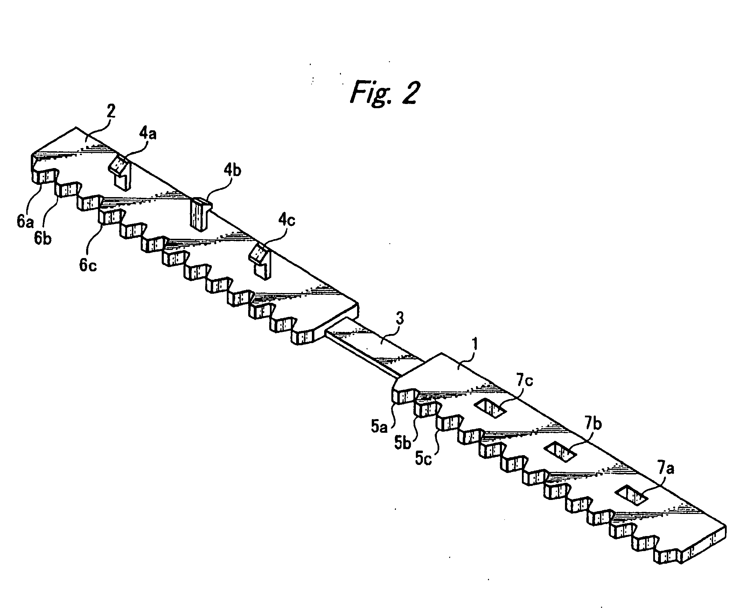

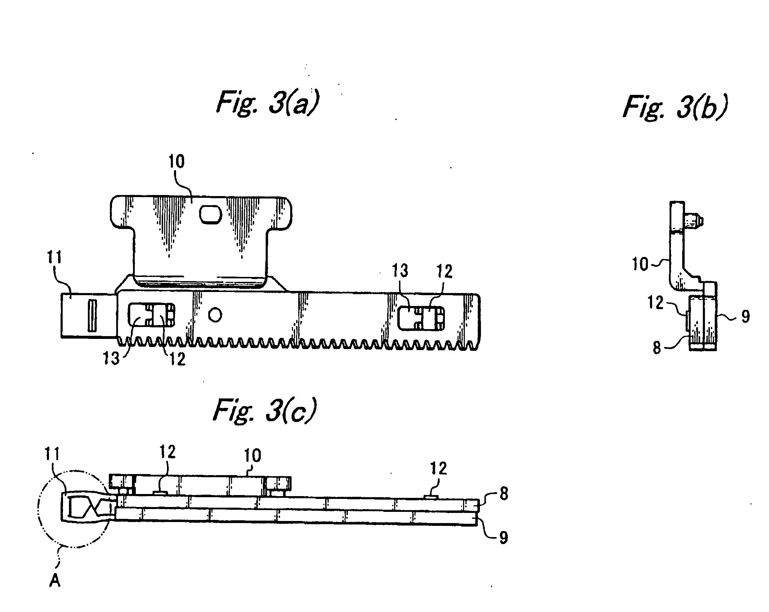

Referring to Fig.1, a rack structure according to the present invention comprises first (or upper) and second (or lower) toothed bars 1 and 2 both integrally connected to each other by an intermediate joint 3 of a soft resin material to provide a linear toothed bar object or a composite rack (see Fig.2), which is so folded about the intermediate joint 3 that the first and second toothed bars 1 and 2 are laid on each other and staggered with their teeth somewhat out of phase, thereby preventing the backlash which otherwise, would be caused between the teeth of the rack and those of the pinion.

As seen from Figs.1 and 2, the first and second toothed bars 1 and 2 have teeth 5a, 5b, 5c ― and teeth 6a, 6b, 6c ― formed at regular intervals on the same side edges respectively The second toothed bar 2 has three hooks 4a, 4b and 4c rising upright from on one side, whereas the first toothed bar 1 has three holes 7a, 7b and 7c made therein. The intermediate hook 4b is oriented to be counter to the other hooks 4a and 4c. The first and second toothed bars 1 and 2 are fastened together with the hooks 4a, 4b and 4c inserted and caught by the hole edges 7a, 7b and 7c when these toothed bars 1 and 2 are folded about the intermediate joint 3 of resilient resin and laid on each other. Thus, these toothed bars 1 and 2 cannot be separated from each other.

Here, it should be noted that the first and second toothed bars 1 and 2 are displaced a short distance "A" relative to each other until the inner stress of the intermediate joint 3 is evenly distributed and balanced (see Fig.1).

Accordingly the teeth 5a, 5b --- of the first toothed bar 1 are staggered from the teeth 6a, 6b --- of the second toothed bar 2; the hooks 4a, 4b and 4c are loosely fitted in the holes 7a, 7b and 7c so that the hooks may be move therein.

The thickness or length of the pinion to be meshed with the composite rack is larger than the thickness of the composite rack, i.e. combined thickness of the folded first and second toothed bars 1 and 2. When the pinion meshes with the so staggered teeth of the composite rack, the offset distance "A" is reduced to almost zero, thus preventing the backlash.

Referring to Figs.3a, 3b and 3c, a rack structure according to another embodiment comprises first (or upper) and second (or lower) toothed bars 8 and 9 both integrally connected to each other by an intermediate joint 11 made of a soft resin material. The second toothed bar 9 has a fitting piece 10 integrally connected to one side. Also, the second toothed bar 9 has hooks 12 rising upright on one side, whereas the first toothed bar 8 has holes 13 made therein. These first and second toothed bars 8 and 9 are folded on each other, and are combined together with the hooks 12 caught in the holes 13 to form a composite rack.

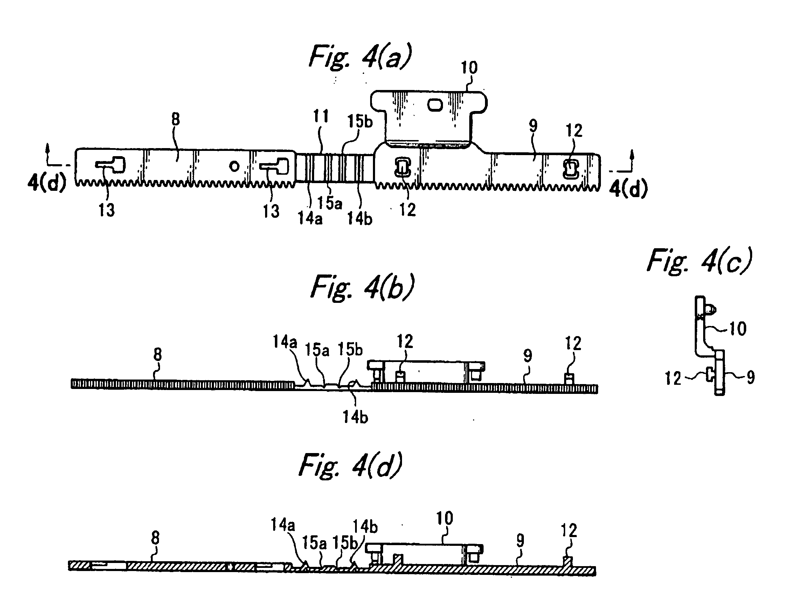

Fig.4 shows the composite rack structure of Fig.3 as being unfolded prior to assembly. The rack is injection-molded from a metal mold in the form of unfolded linear extension. As shown, the first toothed bar section 8 has through holes 13, 13 made therein, whereas the second toothed bar section 9 has hooks 12, 12 formed thereon. The intermediate joint section 11 has two triangular nails 14a and 14b formed thereon. Also, the intermediate joint section 11 has grooves 15a and 15b made to facilitate the folding.

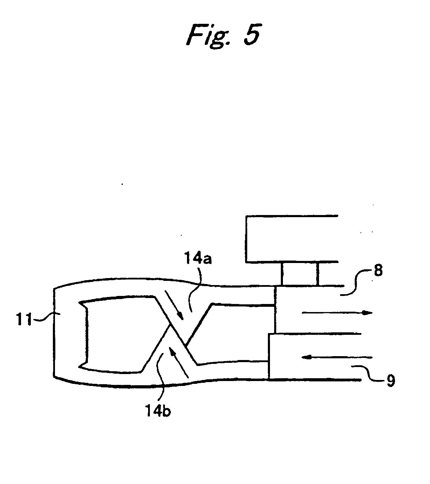

Referring to Fig.5, the first and second toothed bars 8 and 9 are folded about the intermediate joint 11 until the counter nails 14a and 14b are engaged with each other. These nails 14a and 14b are triangular, and therefore when they meet with each other, those confronting sides slide on each other, making the first and second toothed bars 8 and 9 longitudinally move and stagger relative to each other. The resulting offset between the teeth of the first toothed bar 8 and those of the second toothed bar 9 effectively prevent from causing the backlash within the meshed pinion and the composite rack.

A composite rack structure according to the present invention provides the following advantages:

A rack structure is an injection-molded article of a soft resin material, which is a linear extension of two toothed bars integrally connected via an intermediate joint. Such an injection-molded article can be produced easily, and accordingly the manufacturing cost is low. It can be turned into the final shape simply by folding it about its joint. The resultant rack is thin, contributing the downsizing of a disc device, in which the rack structure is built in.

The folded linear object has its first and second toothed bar sections somewhat staggered, thus preventing an associated pinion from playing over the full length of the rack. Such a single piece rack structure can endow the rack-and-pinion with a perfect anti-backlash function, which can be hardly provided as long as use is made of a two-piece article whose two separate toothed bars are coupled together by some resilient means.

The intermediate joint section has counter triangular nails to engage with each other. The off-set amount in the upper and lower, staggered toothed bars, and the pinion-to-rack pressure can be easily controlled in terms of the height, angle and center-position of each nail.

## Claims

1. A rack structure of a rack-and-pinion structure for a feeding mechanism in an electronic device, toy or clock, **characterized in that**: it comprises first and second toothed bars (1, 8 and 2, 9) both integrally connected to each other by an intermediate joint (3, 11) of a soft resin material to provide a linear toothed bar object, which is so folded about the intermediate joint that the first and second toothed bars are laid on each other with their teeth (5, 6) somewhat out of phase, thereby preventing a backlash which otherwise, would be caused between the teeth of the rack and those of the pinion.

2. A rack structure according to claim 1, wherein one of the first and second toothed bars (1, 8 and 2, 9) has hooks (4) rising upright from one side whereas the other toothed bar has holes (7) made therein, whereby the first and second toothed bars are fastened together with the hooks inserted and caught by the hole edges.

3. A rack structure according to claim 1 or 2, wherein the intermediate joint (3, 11) has two counter nails (14a, 14b) formed thereon, these counter nails being so positioned that they are engaged with each other when the intermediate joint is bent, making the teeth of the first and second toothed bars longitudinally out of phase relative to each other.

## Patentansprüche

1. Zahnstangenanordnung einer Zahnstangenantriebanordnung für einen Transportmechanismus in einem elektronischen Gerät, Spielzeug oder Uhr, **dadurch gekennzeichnet, daß** sie eine erste und zweite Zahnschiene (1, 8 und 2, 9) aufweist, die beide durch ein Zwischengelenk (3, 11) aus einem Weichharzmaterial einstückig miteinander verbunden sind, um einen geradlinigen Zahnschienengegenstand bereitzustellen, der um das Zwischengelenk derartig geklappt wird, daß sich die erste und zweite Zahnschiene so aneinanderlegen, daß ihre Zähne (5, 6) etwas phasenverschoben werden, wodurch ein Spiel verhindert wird, das anderenfalls zwischen den Zähnen der Zahnstange und denen des Ritzels bewirkt werden würde.

2. Zahnstangenanordnung nach Anspruch 1, wobei entweder die erste oder die zweite Zahnschiene (1, 8 und 2, 9) Haken (4) hat, die sich von einer Seite aufrechtstehend nach oben erstrecken, während in der anderen Zahnschiene Löcher (7) ausgebildet sind, wodurch die erste und zweite Zahnschiene aneinander befestigt werden, wenn die Haken eingefügt und durch die Lochränder erfaßt werden.

3. Zahnstangenanordnung nach Anspruch 1 oder 2, wobei am Zwischengelenk (3, 11) zwei Gegenstifte (14a, 14b) ausgebildet sind, wobei diese Gegenstifte so positioniert sind, daß sie miteinander in Eingriff treten, wenn das Zwischengelenk gebogen wird, was bewirkt, daß die Zähne der ersten und zweiten Zahnschiene relativ zueinander in Längsrichtung phasenverschoben werden.

## Revendications

1. Structure de crémaillère d'une structure d'engrenage à pignon et crémaillère d'un mécanisme d'alimentation dans un dispositif électronique, un jouet électronique ou une horloge électronique, **caractérisée en ce qu'**elle comprend : des première et seconde crémaillères (1, 8 et 2, 9) toutes deux solidairement raccordées l'une à l'autre par un joint intermédiaire (3, 11) en matériau de résine souple afin de former un objet de crémaillère linéaire plié autour du joint intermédiaire de telle manière que les première et seconde crémaillères soient placées l'une sur l'autre, leurs dents (5, 6) étant quelque peu déphasées, évitant ainsi un jeu entre-dents qui aurait autrement été induit entre les dents de la crémaillère et celles du pignon.

2. Structure de crémaillère selon la revendication 1, dans laquelle l'une parmi la première et la seconde crémaillère (1, 8 et 2, 9) comportent des crochets (4) s'élevant tout droit d'un côté tandis que l'autre crémaillère renferme des trous (7), moyennant quoi les première et seconde crémaillères sont fixées ensemble, les crochets étant insérés et attrapés par les bords des trous.

3. Structure de crémaillère selon la revendication 1 ou 2, dans laquelle le joint intermédiaire (3, 11) comporte sur sa surface deux pointes opposées (14a, 14b), lesdites pointes opposées étant positionnées de sorte qu'elles s'engrènent l'une dans l'autre lorsque le joint intermédiaire est plié, déphasant ainsi les dents des première et seconde crémaillères longitudinalement l'une par rapport à l'autre.
